# EUROPEAN PATENT SPECIFICATION

(11) **EP 0 626 120 B1**
(45) Date of publication and mention of the grant of the patent: **13.01.1999**
(21) Application number: 93914873.0
(22) Date of filing: 05.07.1993
(51) Int. Cl.: H04N 5/21, H04N 5/44

(54) **VIDEO SIGNAL PROCESSING**
VIDEOSIGNALVERARBEITUNG
TRAITEMENT DE SIGNAUX VIDEO

(30) Priority: 03.07.1992 GB 9214219
(43) Date of publication of application: 30.11.1994
(73) Proprietor: SNELL & WILCOX LIMITED, Twickenham, Middlesex TW1 1RQ (GB)
(72) Inventor: STEINBERG, Avigdor, Petersfield, Hampshire GU32 3LS (GB)
(74) Representative: Garratt, Peter Douglas
(86) International application number: GB9301396
(87) International publication number: WO9401966

(56) References cited:
- EP-A- 0 196 756
- US-A- 4 931 743
- US-A- 5 019 908
- US-A- 5 041 904
- US-A- 5 060 057

## Description

This invention relates to video signal processing.

It is an object of this invention to reduce noise levels in video signals and to suppress luminance-to-chrominance cross-talk in decoded video signals.

A variety of filter and other processing techniques have been proposed for noise reduction purposes. Typically, these involve an averaging of the information at one pixel with that from surrounding pixels in one, two or three dimensions. A compromise is usually made between adequate noise reduction and a loss of resolution which is within acceptable limits. A further difficulty arises when there is multi-generation processing of a video signal. If a video signal is filtered repeatedly, using the same or different noise reduction filters, there is a serious risk that the loss of resolution and any artifacts introduced by the filtering process, will increase with each filtering pass.

It is a specific object of this invention to provide for a method of video signal processing which reduces noise in such a manner that a second or further filtering operation upon the same video signal introduces no further degradation.

Accordingly, the present invention consists, in one aspect, in a method of continuous video signal processing, in which adjacent video fields in a succession of video fields are averaged, wherein the current field is averaged alternately with the preceding field and with the succeeding field, in such manner that averaging is conducted only between fields belonging to the same video frame.

It will be recognised that it is standard practice in video post production to ensure frame integrity. By averaging only within a video frame, the present invention thus avoids the spread of any loss of reduction or artifact.

It is further important to recognise that the method according to the present invention is applicable to video material from various sources, including original video material and telecined film material.

In a preferred form of the present invention, the averaging is disabled at high inter-field luminance differences. The assumption is made that high inter-field differences are less likely to have arisen from random noise.

Suitably, the averaging is restricted to high frequency luminance signal components.

In another form, the present invention consists in video signal processing means comprising a field delay line for generating a first video signal, a second video signal advanced with respect to the first video signal by one field interval and a third video signal retarded with respect to the first video signal by one field interval; switch means controlled by the field repetition rate and averaging means for averaging the first video signal and, via the switch means, alternately the second video signal and the third signal, in such manner that averaging is conducted only between fields belonging to the same video frame.

Advantageously, there are provided means for generating an inter-field luminance difference signal and wherein the said averaging process is disabled at high inter-field luminance differences.

Suitably, a high pass filter is provided such that averaging is conducted only at higher frequency signal components.

The invention will now be described by way of example, with reference to the accompanying drawings, in which :-
Figure 1 is a block diagram illustrating a first embodiment of the present invention;
Figure 2 is a diagram illustrating the correspondence between video signals averaged in accordance with this invention;
Figure 3 is a block diagram similar to Figure 1 and illustrating a modification; and
Figure 4 is a block diagram similar to Figure 1 illustrating a further modification.

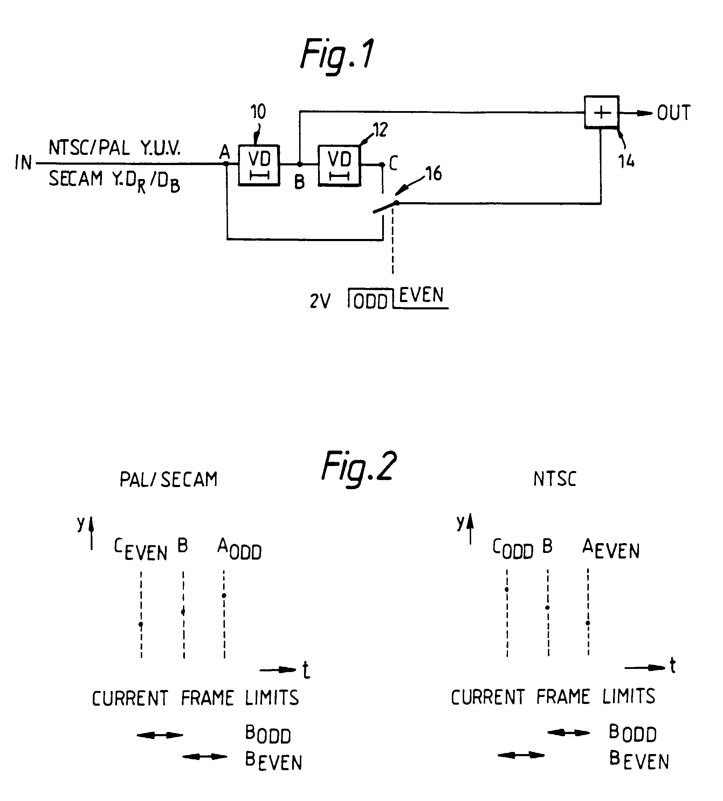

Referring to Figure 1, the filter according to this invention comprises two delay units 10 and 12 each having a delay corresponding to one field interval. Thus in the PAL/SECAM mode the delay is equal to 312H (H being one line interval) whilst in the NTSC mode the delay is equal to 263H. The midpoint of the two delays is taken to an adder 14 whilst a switcher 16 enables a second input to be provided to the adder 14 which is, alternatively, advanced or retarded by one field interval. The switcher is controlled at the field rate.

It is convenient to refer to the successive three fields defined at the input, midpoint and output of the serially connected delays as, respectively, A, B and C. The output of the adder 14, with appropriate scaling, is therefore given, for each odd field, by (A+B)/2 and, for each even field by (B+C)/2. It is therefore ensured that averaging only ever occurs between the odd and even fields of a single video frame. Where the input video signal has been edited, reliance is of course placed on the integrity of frames having been preserved. This is, however, standard post-production practice, as mentioned above.

Filters such as shown in Figure 1 may be provided for both luminance and chrominance channels, for luminance alone or for chrominance alone. The same approach can be adopted for composite signals.

It will be seen that because averaging is confined to a single frame, a second pass through a filter according to this invention will have no effect, the two fields to be averaged in the second pass being the identical results of the first averaging process. There is, of course, a loss of vertical and diagonal resolution but this will be twice as small as the result of the vertical filtering that takes place in a conventional line comb filter. The loss of resolution in the described apparatus is not therefore expected to be ordinarily perceptible.

The present invention will of course serve to reduce random noise. There will be an additional and more particular effect with chrominance errors since the phase of chrominance information alternates from field to field. Thus spurious chrominance information arising through cross-talk from high frequency luminance would be expected to disappear, or at least to be heavily suppressed, on averaging between successive fields. This cross-talk suppression will of course be valuable in a decoder. It will additionally be possible to make use of this invention in an encoder to remove luminance components which might give rise to cross-talk and also to enhance a luminance signal by cancellation of residual chrominance. A still further advantage of the present invention lies in the elimination in chroma flicker arising from the misalignment of heads in replayed S-VHS.

It can be postulated that a large inter-field difference in a luminance signal is less likely to have arisen from random noise than a small inter-field difference. Accordingly, the present invention includes a modification in which the averaging process is disabled or modified in the case of large inter-field differences.

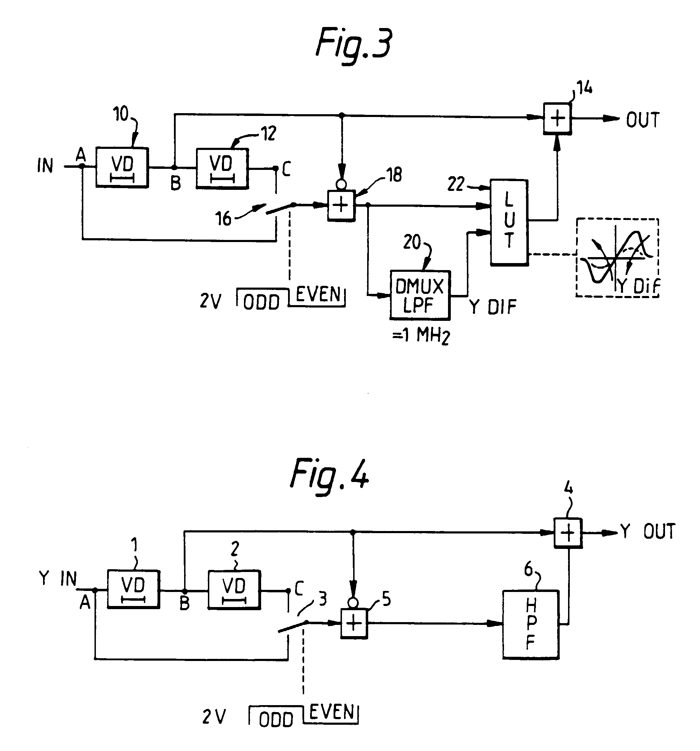

Referring to Figure 3, there is in this modification interposed between the switcher 16 and the second input of the adder 14, a subtractor 18, a low pass filter 20 and a lookup table 22.

The luminance field difference signal from the subtractor 18 is low passed in the filter 20. The second input to the lookup table 22 is the direct output of the subtractor 18. The output of the lookup table is, depending upon whether the field is odd or even, given by K(A-B)/2 or K(C-B)/2. K is a non-linear factor related to the luminance field difference. At small luminance field difference, factor K is set at or close to unity; field averaging occurs and the output of adder 14 is the same as in the embodiment of Figure 1. It is thus ensured that low contrast components such as noise and residual chrominance signals are suppressed. For large luminance field differences (such as high frequency luminance patterns), K is set close to zero; the averaging process is effectively diabled and the ouput of the adder 14 is simply the field B.

Whilst the non-linear factor K is controlled through a luminance field difference signal, the averaging process may be applied both to luminance and chrominance information or even to composite signals.

A still further variation according to the present invention is illustrated in Figure 4. This variation is thought to be applicable principally to luminance signal processing.

In this arrangement, there is a high pass filter 24 interposed between the output of the subtractor 18 and the adder 14. The averaging process is continuous, in the sense that it is not adapted to luminance field differences, but averaging is restricted to high frequency components of the luminance difference.

It should be understood that this invention has been described by way of examples only and a wide variety of further modifications can be made without departing from the scope of the invention. For example, whilst a lookup table is a convenient method of introducing a non-linear factor, other approaches exist. Similarly, the necessary averaging can be conducted using a variety of different processing components, beyond those specifically described.

## Claims

1. A method of continuous video signal processing, in which adjacent video fields in a succession of video fields are averaged, wherein the current field is averaged alternately with the preceding field and with the succeeding field, in such manner that averaging is conducted only between fields belonging to the same video frame.

2. A method according to Claim 1, wherein the averaging is disabled at high inter-field luminance differences.

3. A method according to Claim 1 or Claim 2, wherein the averaging is restricted to higher frequency signal components.

4. Video signal processing means comprising a field delay line for generating a first video signal, a second video signal advanced with respect to the first video signal by one field interval and a third video signal retarded with respect to the first video signal by one field interval; switch means controlled by the field repetition rate and averaging means for averaging the first video signal and, via the switch means, alternately the second video signal and the third signal, in such manner that averaging is conducted only between fields belonging to the same video frame.

5. Video processing means according to Claim 4, wherein there are provided means for generating an inter-field luminance difference signal and wherein the said averaging process is disabled at high inter-field luminance differences.

6. Video processing means according to Claim 4 or Claim 5, wherein a high pass filter is provided such that averaging is conducted only at higher frequency signal components.

## Patentansprüche

1. Methode zur kontinuierlichen Videosignalverarbeitung, bei der benachbarte Videofelder in einer Aufeinanderfolge von Videofeldern gemittelt werden, wobei das gegenwärtige Feld abwechselnd mit dem vorhergehenden und dem nachfolgenden Feld gemittelt derart wird, daß die Mittelwertbildung nur zwischen Feldern, die zum gleichen Videobild gehören, ausgeführt wird.

2. Methode gemäß Anspruch 1, bei der die Mittelwertbildung bei hohen Zwischenfeldluminanzdifferenzen abgeschaltet wird.

3. Methode gemäß Anspruch 1 oder Anspruch 2, bei der sich die Mittelwertbildung auf hochfrequente Signalkomponenten beschränkt.

4. Vorrichtung zur Verarbeitung von Videosignalen, die eine Feldverzögerungsleitung zur Erzeugung eines ersten Videosignals, eines zweiten Videosignals, das in bezug auf das erste Videosignal durch einen Feldabstand vorgerückt ist und eines dritten Videosignals, das in bezug auf das erste Videosignal einen Feldabstand zurückgetzt ist; eine Schaltvorrichtung, die durch die Feldwiederholungsrate gesteuert werden und eine Mittelwertbildungsvorrichtung beinhaltet, die einen Mittelwert zwischen dem ersten Videosignal und, über die Schaltvorrichtung, abwechslend dem zweiten Videosignal und dem dritten Signal derart bildet, daß die Mittelwertbildung nur zwischen Feldern ausgeführt wird, die zum gleichen Videobild gehören.

5. Vorrichtung zur Videoverarbeitung gemäß Anspruch 4, bei der Mittel zur Erzeugung eines Zwischenfeldluminanz-signals bereitgestellt sind und bei der der Vorgang der Mittelwertbildung bei hohen Zwischenfeldluminanzd if-ferenzen abgestellt wird.

6. Vorrichtung zur Videoverarbeitung gemäß Anspruch 4 oder Anspruch 5, bei der ein Hochpaßfilter bereitgestellt ist, so daß die Mittelwertbildung nur bei höherfrequenten Signalbestandteilen ausgeführt wird.

## Revendications

1. Procédé pour le traitement de signaux vidéo continus, dans lequel on met en moyenne des champs vidéo contigus dans une succession de champs vidéo, le champ de courant étant mis en moyenne alternativement avec le champ précédent et avec le champ suivant de telle manière que la mise en moyenne n'est conduite qu'entre des champs faisant partie de la même image vidéo.

2. Procédé selon la revendication 1, dans lequel la mise en moyenne est invalidée aux écarts de luminance interchamp élevés.

3. Procédé selon la revendication 1 ou 2, dans lequel la mise en moyenne est limitée à des composantes de signaux de fréquence supérieure.

4. Moyen de traitement de signaux vidéo comprenant une ligne de retard de champ pour générer un premier signal vidéo, un second signal vidéo avancé par rapport au premier signal vidéo d'un intervalle de champ et un troisième signal vidéo retardé par rapport au premier signal vidéo d'un intervalle de champ ; des moyens de commutation commandés par la vitesse de répétition de champ et des moyens de mise en moyenne pour mettre en moyenne le premier signal vidéo et, par l'intermédiaire des moyens de commutation, alternativement le second et le troisième signal vidéo, de telle sorte que la mise en moyenne n'est conduite qu'entre des champs faisant partie de la même image vidéo.

5. Moyen de traitement vidéo selon la revendication 4, dans lequel il est prévu des moyens pour générer un signal d'écart de luminance interchamp et dans lequel le traitement de mise en moyenne est invalidé à des écarts de luminance interchamp élevés.

6. Moyen de traitement vidéo selon la revendication 4 ou la revendication 5, dans lequel un filtre passe-haut est prévu de telle sorte que la mise en moyenne n'est conduite qu'à des composantes de signaux de fréquence supérieure.
